# EUROPEAN PATENT SPECIFICATION

(11) **EP 3 991 223 B1**
(45) Date of publication and mention of the grant of the patent: **02.08.2023**
(21) Application number: 20744129.6
(22) Date of filing: 26.06.2020
(51) Int. Cl.: H01M 4/133, H01M 4/134, H01M 4/1393, H01M 4/1395, H01M 4/36, H01M 4/38, H01M 4/587, H01M 4/62, H01M 10/0525

(54) **SILICON AND GRAPHITE CONTAINING COMPOSITE MATERIAL AND METHOD FOR PRODUCING SAME**
SILIKON UND GRAPHIT ENTHALTENDER VERBUNDWERKSTOFF UND SEIN HERSTELLUNGSVERFAHREN
MATÉRIAU COMPOSITE CONTENANT DU SILICIUM ET DU GRAPHITE ET PROCÉDÉ DE PRODUCTION ASSOCIÉ

(30) Priority: 28.06.2019 AU 2019902306
(43) Date of publication of application: 04.05.2022
(73) Proprietor: Talga Technologies Limited, Histon Cambridge CB24 9ZR (GB)
(72) Inventor: CAPIGLIA, Claudio, Takatsuki, Osaka 569-1046 (JP); SHIVAREDDY, Sai, Cambridge CB4 1RW (GB); LIU, Fengming, Reading RG6 3DX (GB)
(74) Representative: Wilson Gunn
(86) International application number: PCT/IB2020/056050
(87) International publication number: WO 2020/261194

(56) References cited:
- EP-A1- 2 887 431
- CN-A- 109 742 369
- US-A1- 2015 295 227
- US-A1- 2016 064 731
- US-A1- 2018 097 229

## Description

### Field of the Invention

The present invention relates to a silicon and graphite containing composite material. More particularly, the composite material of the present invention is intended for use as an anode material in lithium-ion batteries.

In one highly preferred form, the present invention further relates to an anode composite comprising a silicon and graphite containing composite material.

The present invention still further relates to a method for producing a silicon and graphite containing composite material.

### Background Art

Presently, silicon/graphite composites are understood to show some promise as a lithium-ion anode material. However, there are number of well-known and understood disadvantages relating to silicon/graphite composites. These disadvantages include high levels of expansion, up to 400%, and poor cycle life. Any commercial application of silicon/graphite composites would need to address at least these issues.

The irreversible capacity loss of presently known and understood silicon-containing anodes is currently addressed through the use of nano-structured silicon particles as the electroactive material. It has been reported that silicon nanoparticles and nanostructured silicon are more tolerant of volume changes on charging and discharging when compared to microscale particles (XH Liu et al., "Size-Dependent Fracture of Silicon Nanoparticles During Lithiation", ACS Nano, 2012, 6 (2), 1522-1531). However, nanoscale particles are not considered to be suitable for commercial scale applications as they are known to be difficult to prepare and handle. In addition to issues relating to silicon particle size, the nature of the silicon surfaces also plays an important role in the formation of the Solid Electrode Interface (SEI) and electronic conductivity. The SEI on the surface of the silicon is not stable and continuously consumes lithium, requiring the modification of the surface so as to avoid, or at least reduce, the exposure of silicon to the electrolyte. Further, silicon is not considered a particularly good conductive material.

A core-shell structured graphite/silicon@pyrolysed-carbon (Gr/Si@C) composite has been fabricated, including mechanical milling, spray drying, and the use of pitch (Li et al, "Scalable synthesis of a novel structured graphite/silicon/pyrolysed carbon composite as anode material for high-performance lithium-ion batteries", Journal of Alloys and Compounds 688 (2016) 1072-1079). In this prior art process, what appears to be a relatively scalable and cost-effective method is demonstrated. Due to the carbon coating of the silicon and graphite present, the cyclability has been much improved relative to much prior art. However, the demonstrated low first cycle efficiency of 77.9% at a capacity of 637.7mAh/g is far from the level required of the battery industry.

International Patent Application PCT/GB2018/051689 (WO 2018/229515) describes firstly the production of silicon nanoparticles through the ball milling of silicon microparticles in a solvent. A pyrolytic 'amorphous' carbon precursor containing at least one oxygen or nitrogen atom is added to silicon nanoparticles and a solvent, the solvent is removed, and the remaining silicon nanoparticles are coated with a thick layer of the pyrolytic carbon precursor. In turn these coated silicon nanoparticles are pyrolysed, forming composite particles comprising a plurality of silicon nanoparticles dispersed in a conductive pyrolytic carbon matrix. In this prior art process, due to the use of a large amount of amorphous carbon, significant First Cycle Loss (FCL) and expansion are still substantial problems. It is believed that the amorphous carbon contributes a large proportion of the unacceptable FCL and expansion experienced. In addition, once the Si@C expands, the connection between silicon and carbon weakens, as amorphous carbon is not elastic.

Using electroless plating of a thick layer of nickel on a micron size silicon, a graphene-caged silicon structure was formed and outstanding cell performance, including high capacity, small expansion, long cycle life and low FCL, was achieved (Li et al., "Growth of conformal graphene cages on micrometre-sized silicon particles as stable battery anodes", Nature Energy, Vol. 1., Article No. 15029 (2016)).

Few-layer graphene-coated silicon nanoparticles have also been described as being formed by way of Chemical Vapour Deposition (CVD) (Son et al., "Silicon carbide-free graphene growth on silicon for lithium-ion battery with high volumetric energy density", Nature Communications, Vol. 6., Article No. 7393 (2015)). Again, these coated silicon nanoparticles are said to provide outstanding cell performance, including high capacity, small expansion, long cycle life and low FCL. However, the processes by which these graphene-coated materials are formed are known to be expensive and are not scalable, particularly not to the level required for commercial application.

A more cost-effective method of coating few-layer graphene on silicon is described in the Patent Publication WO 2015/073674 A1, through the coating of silicon with graphene by way of bead-milling of a mixture of graphite and silicon. However, using this method does not yield a product with the required performance. For example, there is a substantial capacity drop (>45%) in the first 200 cycles.

US 2016/064731 (Jung Sung-Ho, et. al.) describes the manufacture of a carbon-silicon composite in which a silicon-carbon-polymer matrix is prepared and that is in turn heat-treated to carbonize the matrix. This carbonized matrix is pulverised and mixed with a carbon raw material, before then being carbonized to produce the carbon-silicon composite of the invention. This carbon-silicon composite is used as an anode slurry to provide an anode for a secondary battery.

US 2018/097229 (Jo Sungnim, et. al.) describes the manufacture of a negative active material comprising the formation of a silicon-carbon primary particle having an apparent density of about 2 grams per cubic centimetre or greater, thermally treating a plurality of the primary particles, a second carbonaceous material, and a foaming agent, to form a porous silicon-carbon secondary particle. This secondary particle may or may not be provided with a further coating layer.

The composite material and method of the present invention has as one object thereof to overcome substantially one or more of the above mentioned problems associated with prior art processes, or to at least provide a useful alternative thereto.

The preceding discussion of the background art is intended to facilitate an understanding of the present invention only. This discussion is not an acknowledgement or admission that any of the material referred to is or was part of the common general knowledge as at the priority date of the application.

Throughout the specification and claims, unless the context requires otherwise, the word "comprise" or variations such as "comprises" or "comprising", will be understood to imply the inclusion of a stated integer or group of integers but not the exclusion of any other integer or group of integers.

Throughout the specification and claims, unless the context requires otherwise, references to "ball milling" are to be understood to include reference to "bead milling", and references to "bead milling" are to be understood to include reference to "ball milling". Similarly, unless the context requires otherwise, references to "ball milling" and/or "bead milling" are to be understood to include reference to "grinding", and references to "grinding" are to be understood to include reference to "bead milling" and/or "ball milling" as the context requires.

Throughout the specification and claims, unless the context requires otherwise, references to "mechanofusion" are to be considered to refer to mixing that induces mechano-chemical reactions between multiple particles creating new particles having new characteristics. Similarly, references to "mixing" are to be understood to include reference to mechanofusion.

### Disclosure of the Invention

In accordance with the present invention there is provided a silicon and graphite containing composite material comprising a plurality of silicon nanoparticles coated with graphite particles, few-layer graphene particles, graphite nanoparticles, a carbon matrix, and an amorphous carbon external shell, wherein each of the graphite particle coated silicon nanoparticles, the few-layer graphene particles, and the graphite nanoparticles are held within the carbon matrix.

Preferably, the carbon matrix is provided in the form of an amorphous carbon matrix, a crystalline carbon matrix, or a combination of both an amorphous carbon matrix and a crystalline carbon matrix.

The graphite particles are preferably in the form of graphene-like nano-sheets.

In one form a further outside layer of amorphous carbon is provided about the plurality of silicon nanoparticles, graphite particles, and carbon matrix, but within the shell.

The outside layer of amorphous carbon may further comprise one or more oxides. The one or more oxides may preferably be present in the form of Al₂O₃, TiO₂, ZrO₂, BaTiOs, MgO, CuO, ZnO, Fe₂O₃, GeO₂, Li₂O, MnO, NiO, or zeolite, or any combination thereof.

Preferably, the oxides have a particle size in the range of about 20 nm to 1 micrometer (micron).

Preferably, the composite material possesses a level of elastic properties conferred by the presence of one or more of the graphite particles, graphene, few-layer graphene and graphite nanoparticles that may be provided within the amorphous carbon matrix.

In accordance with the present invention there is still further provided an anode composite comprising a composite material as described hereinabove.

In accordance with the present invention there is yet still further provided a method for the production of a composite material, the method comprising the method steps of:
(i) Subjecting silicon particles to a size reduction step with graphite particles in a solvent, optionally in the presence of a polymer, to produce graphite particle coated silicon nanoparticles, few-layer graphene particles and graphite nanoparticles;
(ii) Processing the product of step (i) with or without a binder to produce composites;
(iii) Thermal treatment of the composites of step (ii), thereby producing a composite material comprising a plurality of graphite particle coated silicon nanoparticles, few-layer graphene particles, graphite nanoparticles and a carbon matrix, wherein each of the particles are held within the carbon matrix;
(iv) Coating of the composite material of step (iii) with a binder; and
(v) Thermal treatment of the composite material of step (iv) thereby producing a shell comprising amorphous carbon.

Preferably, the shell further comprises one or more oxides. Still preferably, the one or more oxides are provided in the form of Al₂O₃, TiO₂, ZrO₂, BaTiOs, MgO, CuO, ZnO, Fe₂O₃, GeO₂, Li₂O, MnO, NiO, or zeolite, or combination thereof.

In one form of the present invention, the method further comprises an initial step in which a silicon material is subjected to a size-reduction step, in a solvent, to produce the silicon nanoparticles of step (i).

Preferably, the silicon material of the initial step is provided in the form of micron-scale silicon particles.

In one form of the present invention, the size reduction step of step (i) provides silicon nanoparticles having a size of between about 20 to 200 nm.

Still preferably, the size-reduction steps of the initial step and step (i) are each a grinding step. Still further preferably, the grinding steps are conducted in one or more bead mills.

In one form of the present invention, the solvent is provided in the form of a non-aqueous solvent. Preferably, the solvent is provided in the form of isopropyl alcohol.

In one form of the present invention, the polymer is selected from the group of polyethylene oxide (PEO), polyvinyl alcohol (PVA), polyvinylidine fluoride (PVDF), poly(vinylidenefluoride-co-hexafluoropropylene) (PVDF-HFP), and poly(methyl methacrylate) (PMMA).

The processing of step (ii) may, in one form of the present invention, preferably be provided in the form of spray-drying, in the presence of a binder.

The processing of step (ii) may, in a further form of the present invention, be provided in the form of a mixing step. The mixing step preferably comprising a hybridising process whereby the secondary particles or product so produced is spheronised.

Preferably, the thermal treatments of steps (iii) and (v) are provided in the form of pyrolysis.

Still preferably, the thermal treatments of steps (iii) and (v) convert any binder present to amorphous carbon.

The temperature of the thermal treatment of step (iii) is preferably lower than that of step (v).

After the thermal treatment of step (iii), the composite material's surface area (BET) is preferably in the range of about 70-120m²/g. After the thermal treatment of step (v), the material's BET is preferably in the range of about 10-30m²/g.

Preferably, the graphite particles of the milling step (i) are provided in the form of pre-exfoliated graphite particles.

In one form of the present invention, the milling process of step (i) produces graphene that attaches to the silicon nanoparticles.

The thermal treatment of step (iii) is preferably conducted at a temperature in the range of about 500°C to 700°C.

Still preferably, the thermal treatment of step (v) is conducted at a temperature in the range of about 750°C to 1100°C.

Yet still preferably, the thermal treatment of step (v) is conducted at a temperature in the range of about 850°C to 1000°C.

Preferably, the processing of step (ii) is conducted by way of spray-drying or mechanofusion.

### Brief Description of the Drawings

The present invention will now be described, by way of example only, with reference to two embodiments thereof and the accompanying drawings, in which:-
Figure 1 is a schematic representation of a process for the production of a composite material in accordance with the present invention;
Figure 2 is a scanning electron micrograph (SEM) of the Applicant's graphite material, showing flake shaped graphite mixed with few-layer graphene (FLG);
Figure 3 is a scanning electron micrograph (SEM) of the Applicant's bead-milled exfoliated graphite (10% exfoliated graphite in IPA with bead-milling for 168min);
Figure 4 depicts several scanning electron micrograph (SEM) images of the composite material of the present invention, wherein * designates graphite thin flake, and ** designates few-layer graphene;
Figure 5 shows the results of half-cell testing on the composite material of the present invention with different amount of composite content cycled at the following - Lithiation: 1^{st} cycle: 0.1C to 5mV then kept at 5mV until 0.01C, other cycles: 0.2C to 5mV then kept at 5mV until 0.25 C; Delithiation: 1^{st} cycle: 0.1C to 1.0V, other cycles: 0.2C to 1.0V. The silicon content in the composite is in the 30-50 %Wt range;
Figure 6 shows the results of calendering effect testing on the anode composites of Si@C and Gr@Si@C1@C2, respectively;
Figure 7 shows the results of full-cell testing of the composite material of the present invention; and
Figures 8a and 8b show the result of cycling and capacity retention for a full cell testing of the composite material with 97% capacity retention after 140 cycles at 0.5C.

### Best Mode(s) for Carrying Out the Invention

The present disclosure provides a silicon and graphite containing composite material comprising a plurality of silicon nanoparticles, graphite particles, a carbon matrix, and an external shell, wherein the silicon nanoparticles and graphite particles are held within the carbon matrix. The carbon matrix is provided in the form of an amorphous carbon matrix, a crystalline carbon matrix, or a combination of both an amorphous carbon matrix and a crystalline carbon matrix.

The silicon nanoparticles may be coated in the graphite particles. The graphite particles may be provided in the form of graphene-like nano-sheets. The composite material may further comprise a plurality of few-layer graphene particles. The composite material may still further comprise graphite particles at greater than nanoparticle scale. The composite material possesses a level of elastic properties conferred by the presence of one or more of the graphite particles, graphene, few-layer graphene and graphite nanoparticles (GNP) provided within the amorphous carbon matrix.

In one form a further outside layer of amorphous carbon is provided about the plurality of silicon nanoparticles, graphite particles, and carbon matrix, but within the shell.

The outside layer of amorphous carbon may further comprise one or more oxides. The one or more oxides may be present in the form of Al₂O₃, TiO₂, ZrO₂, BaTiOs, MgO, CuO, ZnO, Fe₂O₃, GeO₂, Li₂O, MnO, NiO, or zeolite, or a combination thereof. The oxides have, for example, a particle size in the range of 20 nm to 1 micron.

The present disclosure further provides an anode composite comprising a composite material in one of the forms as described hereinabove and/or hereinafter.

The present disclosure still further provides a method for the production of a composite material, the method comprising the method steps of:
(i) Subjecting silicon particles to a size reduction step with graphite particles in a solvent and/or in the presence of a polymer, to produce coated silicon nanoparticles;
(ii) Processing the product of step (i) with or without a binder to produce composites;
(iii) Thermal treatment of the composites of step (ii), thereby producing a composite material comprising a plurality of coated silicon nanoparticles, graphite particles and a carbon matrix, wherein the graphite particles are held within the carbon matrix;
(iv) Coating of the composites of step (iii) with a binder; and
(v) Thermal treatment of the composites of step (iv) thereby producing a shell comprising amorphous carbon.

The shell further comprises one or more oxides. For example, the one or more oxides are provided in the form of Al₂O₃, TiO₂, ZrO₂, BaTiOs, MgO, CuO, ZnO, Fe₂O₃, GeO₂, Li₂O, MnO, NiO, or zeolite, or a combination thereof.

In one form of the present disclosure the method further comprises an initial step in which a silicon material is subjected to a size-reduction step, in a solvent, to produce the silicon nanoparticles of step (i).

The silicon material of the initial step is provided in the form of micron-scale silicon particles. The size-reduction steps of the initial step and step (i) are each a grinding step. Still further preferably, the grinding steps are conducted in one or more bead mills.

The solvent is provided in the form of a non-aqueous solvent. One suitable non-aqueous solvent is isopropyl alcohol (IPA).

If a polymer is present, the polymer is, for example, selected from the group of polyethylene oxide (PEO), polyvinyl alcohol (PVA), polyvinylidine fluoride (PVDF), poly(vinylidenefluoride-co-hexafluoropropylene) (PVDF-HFP), and poly(methyl methacrylate) (PMMA). The polymer is present in the range of 1 to 40% wt/wt, and the silicon particles present in the range of 1 to 80% wt/wt. In one preferred form of the present invention the polymer is present at 5% wt/wt and the silicon particles present at 10% wt/wt.

The processing of step (ii) may be provided in the form of spray-drying, in which the presence of a binder is preferred. Alternatively, the processing of step (ii) may be provided in the form of a mixing or mechanofusion step. The mixing step comprising a hybridising process whereby the secondary particles or product so produced is spheronised.

The thermal treatment of step (iii) is provided in the form of pyrolysis. The thermal treatment of step (iii) converts any binder present to amorphous carbon.

The graphite particles of the size reduction step (i) are provided in the form of pre-exfoliated graphite particles, whereby the size reduction process produces graphene that attaches to the silicon nanoparticles.

The thermal treatment of step (iii) is conducted at a temperature in the range of about 500°C to 700°C. The thermal treatment of step (v) is conducted in the range of about 750°C to 1100°C, or in one preferred form, in the range of about 850°C to 1000°C.

The present disclosure further provides a method for the production of a composite material, the method comprising the method steps of:
(i) Subjecting silicon particles to a size reduction step with graphite particles in a solvent and/or in the presence of a polymer, to produce coated silicon nanoparticles;
(ii) Processing the product of step (i) with or without a binder to produce composites;
(iii) Thermal treatment of the composites of step (ii), thereby producing a composite material comprising a plurality of coated silicon nanoparticles, graphite particles and a carbon matrix, wherein the graphite particles are held within the carbon matrix;
(iv) Coating of the composites of step (iii) with a binder; and
(v) Thermal treatment of the composites of step (iv) thereby converting the binder to form a shell comprising amorphous carbon.

The present disclosure still further provides a method for the production of an anode composite, the method comprising the method steps of:
(i) Subjecting silicon particles to a size reduction step with graphite particles in a solvent and/or in the presence of a polymer, to produce coated silicon nanoparticles;
(ii) Processing the product of step (i) with or without a binder to produce composites;
(iii) Thermal treatment of the composites of step (ii), thereby producing an anode composite material comprising a plurality of coated silicon nanoparticles, graphite particles and a carbon matrix, wherein the graphite particles are held within the carbon matrix;
(iv) Coating of the composites of step (iii) with a binder; and
(v) Thermal treatment of the composites of step (iv) thereby converting the binder to form a shell comprising amorphous carbon.

In one form of the present disclosure the method further comprises an initial step in which a silicon material is subjected to a size-reduction step, in a solvent, to produce the silicon nanoparticles of step (i). The silicon material of the initial step is provided in the form of micron-scale silicon particles.

The size-reduction steps of the initial step and step (i) are each a grinding step. The grinding steps are conducted in one or more bead mills.

In one form of the present disclosure the solvent is provided in the form of a non-aqueous solvent. The solvent may be provided in the form of isopropyl alcohol.

Where present, the polymer is selected from the group of polyethylene oxide (PEO), polyvinyl alcohol (PVA), polyvinylidine fluoride (PVDF), poly(vinylidenefluoride-co-hexafluoropropylene) (PVDF-HFP), and poly(methyl methacrylate) (PMMA). The polymer is present in the range of 1 to 40% wt/wt, and the silicon particles present in the range of 1 to 80% wt/wt. In one preferred form of the present invention the polymer is present at 5% wt/wt and the silicon particles present at 10% wt/wt.

The processing of step (ii) may be provided in the form of spray-drying, in which the presence of a binder is preferred. Alternatively, the processing of step (ii) may be provided in the form of a mixing step. The mixing step comprising a hybridising process whereby the product is spheronised.

The thermal treatment of step (iii) is provided in the form of pyrolysis. The thermal treatment of step (iii) converts any binder present to amorphous carbon.

The graphite particles of the milling step (i) are provided in the form of pre-exfoliated graphite particles.

In one form of the present disclosure the milling process of step (i) produces graphene that attaches to the silicon nanoparticles.

The thermal treatment of step (iii) is conducted at a temperature in the range of about 500°C to 700°C. The thermal treatment of step (v) is conducted in the range of about 750°C to 1100°C, or in one preferred form, in the range of about 850°C to 1000°C.

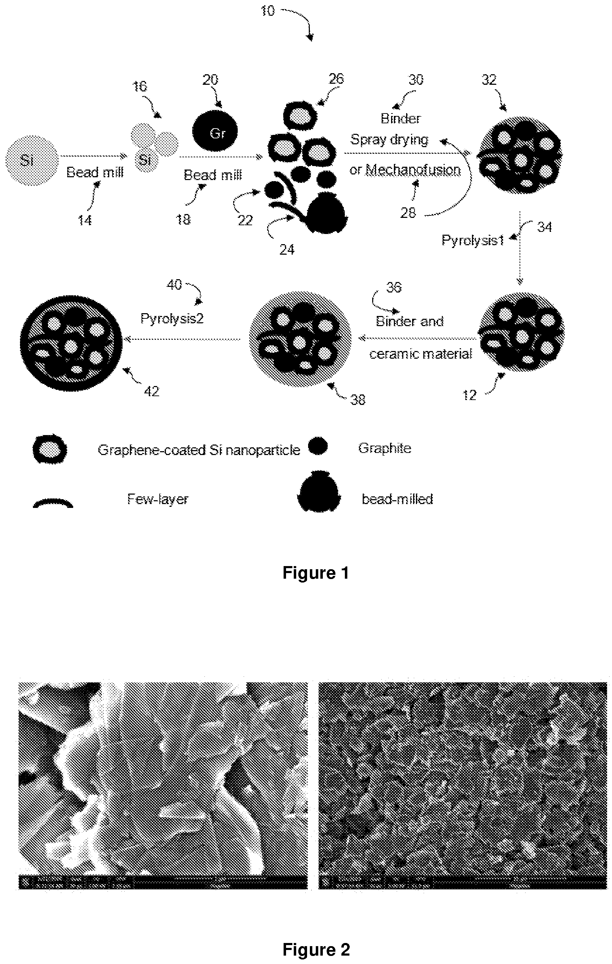

In Figure 1 there is shown a process 10 in accordance with a first embodiment the process 10 being for the production of a final composite material 42. The process 10 comprises an initial silicon material size reduction step, for example a milling step 14 producing silicon nanoparticles 16, and another size reduction step, for example a milling step 18, in which the silicon nanoparticles are milled in a solvent with graphite particles 20 to produce each of graphite nanoparticles 22, few-layer graphene 24 and graphene coated silicon nanoparticles 26. The solvent is a non-aqueous solvent, for example isopropyl alcohol. The milling steps 14 and 18 may conveniently be conducted in one or more ceramic bead mills, utilising beads of 500 micron in size.

The silicon nanoparticles are provided, for example, in the range of about 80 nm - 150 nm. The graphite particles 20 may be provided at a size of less than about 30 micron. In one form of the present invention the graphite particles are provided in the form of pre-exfoliated graphite.

The process 10 further comprises a processing step 28, for example a spray-drying or mechanofusion step, in which the product of the milling step 18, with the addition of a binder 30, is spray dried or mechanofused to produce secondary particles or composites 32. The binder 30 may be provided in the form of pitch. Alternatively, another organic carbon source may constitute the binder 30. The composites 32 produced by the processing step 28 are, for example, of a size between 1 and 40 micron.

The process 10 still further comprises a thermal treatment step, for example pyrolysis 34, of the composites 32, by which the binder 30 is converted to amorphous carbon thereby forming a first intermediate composite material 12. The pyrolysis 34 takes place at a temperature of between about 500°C to 700°C.

A further coating is applied to the first intermediate composite material 12 with a binder 36, for example an organic source, to form a second intermediate composite 38. In one form the binder 36 is provided in the form of pitch. The binder 36 may in some forms contain one of, or mixtures of, oxide materials. The oxide materials may for example be Al₂O₃, TiO₂, ZrO₂, BaTiOs, MgO, CuO, ZnO, Fe₂O₃, GeO₂, Li₂O, MnO, NiO, or Zeolite, or a combination thereof.

The process 10 still further comprises a further thermal treatment step, for example a pyrolysis step 40, in which the second intermediate composite 38 is pyrolysed and the binder 36 converted to amorphous carbon, thereby forming the composite material 42. The pyrolysis step 40 takes place at a temperature of between 750°C to 1100°C, for example between 800°C to 1000°C.

Because of the presence of the graphene, FLG and GNP, it is understood by the Applicants that the composite material possesses some elastic properties, which will be helpful to keep the micron size anode composites integrated during expansion (lithiation) and prevent or at least reduce the direct exposure of the silicon surfaces to an electrolyte.

The Applicants envisage that the benefits of the composite material of the present invention may include one or more of the use of low cost bead milling to produce nanoscale silicon particles in the range of 20 nm - 200 nm, low cost of bead milling for the formation of the graphene-coated silicon particles, and the generation of FLG and GNP during bead-milling. The use of FLG and GNP in the composite material and anode composites of the present application for increasing the composite's elasticity, is a further advantage that may be realised by the present application.

In accordance with another embodiment the 'another' size reduction step comprises the mixing of graphite particles with the silicon nanoparticles in the presence of a polymer whilst undergoing mixing/size reduction. The polymer is, for example, selected from the group of polyethylene oxide (PEO), polyvinyl alcohol (PVA), polyvinylidine fluoride (PVDF), Poly(vinylidenefluoride-co-hexafluoropropylene) (PVDF-HFP), and poly(methyl methacrylate) (PMMA). The polymer is present in the range of 1 to 40% wt/wt, and the silicon particles present in the range of 1 to 80% wt/wt. In one preferred form the polymer is present at 5% wt/wt and the silicon particles present at 10% wt/wt.

The mixture so produced is passed to the processing of step (ii). The processing step is provided in the form of a mixing step, comprising a hybridising process whereby the product is spheronised. This hybridisation, or spheronisation, process provides 'potato' shaped particles. The mixed or spheronised product is in turn the passed to a thermal treatment step as described hereinabove in accordance with the first embodiment of the present invention. However, in this second embodiment the polymer becomes the carbon matrix within which the graphite particles are held/located as they surround the silicon nanoparticles, without the need for the additional binder utilised in the first embodiment of the present invention.

The process of the present application may be better understood with reference to the following non-limiting example.

### EXAMPLE

### Talga graphite

Figure 2 shows the typical natural graphite from the Applicant's proprietary source. As can be seen, the graphite is in flake shape mixed with FLG. For the spheric shape materials, the contact is normally head to head. While, for the flake shaped materials, the contact could be face-to-face. So, in the mixtures of silicon and graphite, the flake shaped graphite is better to keep the physical contact during the silicon expansion and extraction. In addition, the FLG in the mixtures is also understood by the Applicant to play an important role in keeping good contact due to its high flexibility.

### Talga exfoliated graphite

The Applicants have developed a unique exfoliated-graphite (referred to by the Applicants as Taiga HSA) for multiple applications, described in detail in International Patent Application PCT/GB2018/052095 (WO 2019/020999),

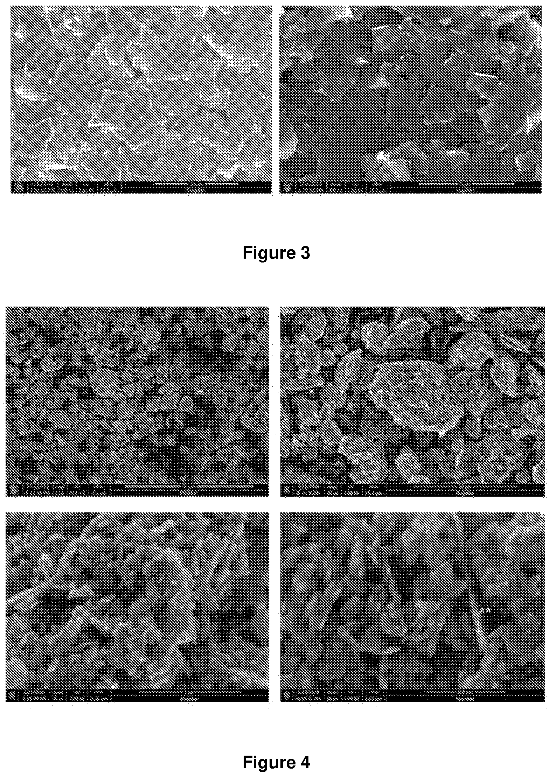

The Applicant's HSA has expanded gaps between the graphene layers in the graphite. So, compared to typical or 'normal' graphite, the graphene layers would be easier to peel off from the HSA and create FLG during bead milling. As shown in Figure 3, after about 168min bead-milling of 10% HSA in IPA, FLG and materials with thin flakes dominate.

### SEM on silicon/graphite composites

In order to make silicon/graphite composites (Gr@Si@C1@C2) in accordance with the present invention, micron size silicon particles were initially bead-milled into nanoscale particles (d50, 50-200nm) in the non-aqueous solvent (for example IPA). HSA was then added into the mixtures of the milled silicon/IPA and subjected to further milling, whereby HSA produced FLG, graphene, GNP (graphite nanoparticles) and thin flakes. Spray drying was used to convert the nano-mixtures into micron size secondary particles. Due to the use of organic binders during spray drying or bead-milling, thermal treatment was applied to convert them into amorphous carbon. Figure 4 shows SEM images of the silicon/graphite secondary particles after thermal treatment. As can be seen, the nanomaterials were converted into easy-handling micron size particles, containing GNP and FLG.

### Electrochemistry characterization in half-cell

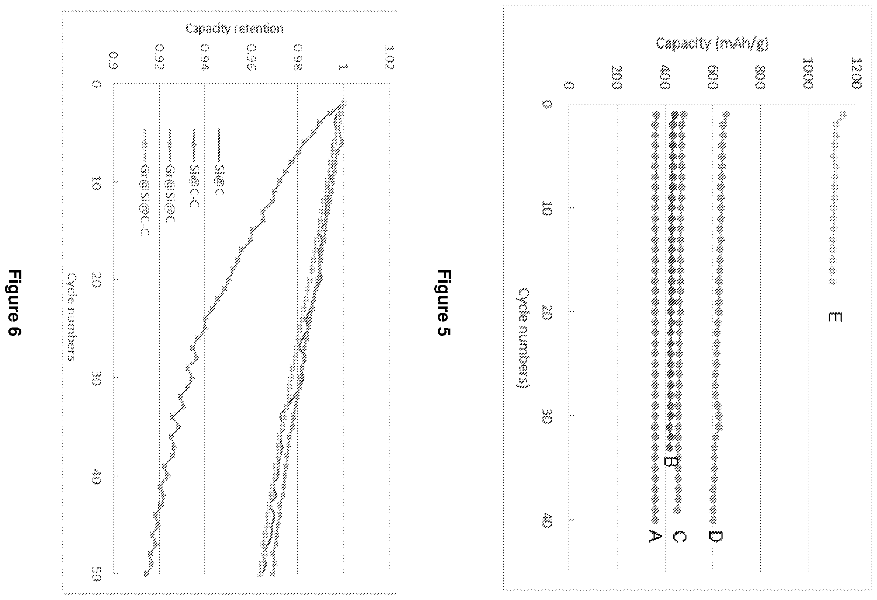

Half-cell testing was carried out on the Gr@Si@C1@C2and the graphite control sample. Figure 5 shows the delithiation capacity with various loadings of Gr@Si@C1@C2. The composites' details are shown in Table 1 below.

As can be readily appreciated, each of the silicon/graphite composites in accordance with the present invention show a higher capacity compared to that of the original graphite material, and their capacity increases with the loading of Gr@Si@C1@C2.

Further details of the half-cell testing on the Si/graphite composites, the results of which are shown in Figure 5, include: Coating for A-D: active (graphite + Gr@Si@C1@C2):CMC:SBR: Cmix =94:2:2:2 in weight. Coating for E: active (Gr@Si@C1@C2):CMC:SBR: Cmix =80:8:8:4. Lithiation: 1st cycle: C/10 to 5mV then stays at 5mV until C/100, other cycles: C/5 to 5mV then stay at 5mV until C/40. Delithiation: 1st cycle: C/10 to 1.0V, other cycles: C/5 to 1.0V. A: graphite sample; B-E with Gr@Si@C1@C2for 8%, 16.1%, 32.2% and 80% respectively. Additional details for A-E are provided in Table 1 below.

In both the above detail and Table 1 below, CMC designates carboxymethyl cellulose and SBR designates styrene butadiene rubber.

**Table 1 - Composite details of A-E as shown in Fig. 5.**

| | Active materials | | Binder | | Cmix** |
|---|---|---|---|---|---|
| | Graphite | Gr@Si@C1@C2* | CMC | SBR | |
| A | 94.0% | 0.0% | 2% | 2% | 2% |
| B | 86.5% | 7.5% | 2% | 2% | 2% |
| C | 79.0% | 15.0% | 2% | 2% | 2% |
| D | 63.9% | 30.1% | 2% | 2% | 2% |
| E | 0.0% | 80.0% | 8% | 8% | 4% |

| | | | | | |
|---|---|---|---|---|---|
| * Gr:Si =1:1 in weight during milling and Si% in Gr@Si@C1@C2is 31.1% after thermal treatment at 850°C for 4 hrs. ** Cmix contains carbon black, carbon nanotube and VGCF with ratio of 2:1:1 in weight. | | | | | |

### Comparison between Si@C and Gr@Si@C1@C2

During the bead milling, 1,5-dihydroxynaphlene was used to completely replace the EG. After spray drying and pyrolysis, the product is called Si@C. A number of comparisons are listed in Table 2 below. As can be seen, the example with 2.5% Si in Gr@Si@C1@C2has higher capacity than that with 3.4% Si in Si@C. With similar Si content, for example 10%, about 12% higher capacity can be found in the material of Gr@Si@C1@C2compared to that from Si@C. According to the capacity data from 5% and 10% Si@C, the capacity for 5% Si content is about 460 mAh/g, which is also about 10% less than that from Gr@Si@C1@C2with similar silicon content. In addition, it also indicates that a better cycling life could reasonably be expected for Gr@Si@C1@C2when it has a similar capacity with that of Si@C.

**Table 2 - Comparison between Si@C and Gr@Si@C1@C2.**

| | Si%* | Capacity (mAh/g)** | Cycle numbers at 80% retention |
|---|---|---|---|
| Si@C | 3.4 | 430 | >600 cycles |
| | 6.7 | 488 | 450 cycles |
| | 10.1 | 586 | 220 cycles |
| | 13.4 | 625 | 180 cycles |
| Gr@Si@C1@C2 | 2.5 | 441 | |
| | 5.0 | 506 | 450 cycles |
| | 10.0 | 657 | 280 cycles |
| | 24.9 | 1148 | |

| | | | |
|---|---|---|---|
| * The silicon content here includes all the silicon (the pure Si and the Si from SiO₂). **The capacity is from the first cycle reversible capacity (delithiation) at C/10. | | | |

Figure 6 then shows the calendering effect on the half-cell capacity retention with the anode composites of Si@C and Gr@Si@C1@C2, respectively. Further details for calendering effect testing, the results of which are shown in Figure 6, include: Coating for Si@C: active (graphite + Si@C):CMC:SBR: Cmix =(84.6: 9.4:):2:2:2 in weight; Coating for Gr@Si@C1@C2: active (Gr@Si@C1@C2):CMC:SBR: Cmix =(78.8:15.2):2:2:2; Si@C-C and Gr@Si@C-C (Gr@Si@C1@C2) are same as above respectively, but they were subjected to a 2-ton press after coating; Lithiation: 1st cycle: C/10 to 5mV then stays at 5mV until C/100, other cycles: C/5 to 5mV then stay at 5mV until C/40; Delithiation: 1st cycle: C/10 to 1.0V, other cycles: C/5 to 1.0V.

In terms of the testing performed in respect of the calendering effect, two coatings with similar capacity (~490mAh/g) were used. For comparison, a 2-ton press was applied after coating. As shown in Figure 6, for Si@C, the capacity retention dropped about 5% from 96.4% to 91.5% after 50 cycles. However, for the composites containing Gr@Si@C1@C2, only about 0.5% drop was observed. This indicates that the composite's structure containing Gr@Si@C1@C2 is much more stable than that containing Si@C. It is understood by the Applicant that the contents of FLG, graphene and GNP in the Gr@Si@C1@C2 played an important role in keeping the structure due to their relatively high flexibility.

### Comparison between Si@C, Gr@Si@C and Gr@Si@C1@C2

In order to form Gr@Si@C1@C2, a relative low temperature, for example 500-700°C, is used for converting the binder 30 into carbon with high surface area and form Gr@Si@C, followed by a further coating with a binder 36, such as pitch or dihydroxynaphthalene, via ordinary mixing in a solvent. Then, evaporate the solvent and apply a further heat treatment at a relative high temperature, such as 800-1000°C, to form the final Gr@Si@C1@C2. Binder 36 may contain one of the contents or mixtures of Al₂O₃, TiO₂ and/or other ceramic material.

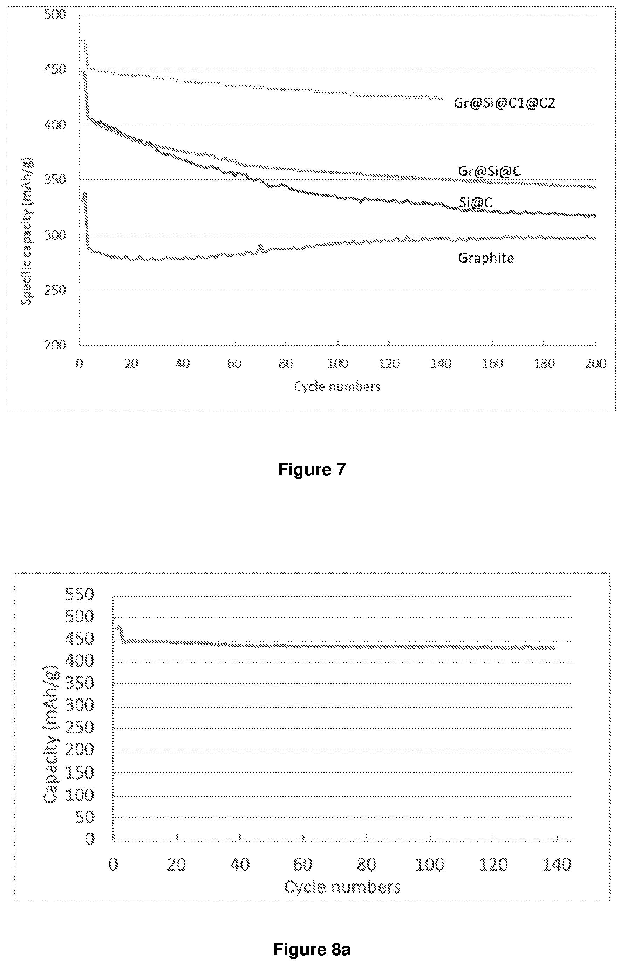

Figure 7 shows the full cell data among the anode materials of commercial graphite, Si@C, Gr@Si@C and Gr@Si@C1@C2. Coating for anode: active:CMC:SBR: Cmix =94:2:2:2 in weight, where the active is chosen from graphite, Si@C, Gr@Si@C and Gr@Si@C1@C2, respectively. Except in the graphite control sample, the silicon content in active material is about 4%. After coating, all the anode coatings were calendered into about 1.3g/cm3. Cathode is from NMC111. The capacity ratio of N/P is about 1.05. Charging: at 1st cycle, C/10 to 4.2V then stays at 4.2V until C/100. Other cycles: C/2 to 4.2V then stays at 4.2V until C/10; Discharge: at 1st cycle, C/10 to 3.0V. Other cycles: C/2 to 3.0V.

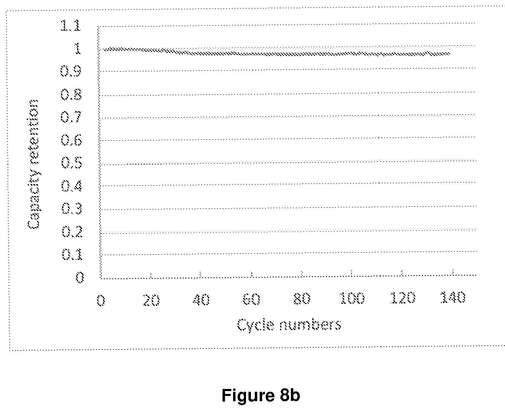

Figures 8a and 8b show full cell data for the composite material of the present invention. The Gr@Si@C1@C2 additive in graphite anode (meaning approximately 3% Si in final anode) results in -97% capacity retention after 140 cycles at 0.5C. The cell is cycled with the following protocol: Charge: 1st &2nd cycle: C/10 to 4.2V then stays at 4.2mV until C/100; other cycles: C/2 to 4.2V then stay at 4.2V until C/10. Discharge: 1st & 2nd cycle: C/10 to 3.0V; other cycles: C/2 to 3.0V. N/P-1.05.

It is envisaged that the spray dryer described hereinabove may be advantageously replaced with a spouted fluidised bed system, for example,

It is further envisaged that the size reduction step (i) provides graphite particles that have a high or large "aspect ratio". Such graphite particles may encompass all or some of any anticipated graphite nanoparticles and any few layer graphene (FLG) produced.

As can be seen with reference to the above description, the composite material and method of producing same of the present disclosure provide one or more advantages when compared with the prior art, including low cost ball or bead milling to produce nanoscale silicon particles, low cost ball or bead milling to produce formation of graphene coated silicon particles, the generation of few-layer graphene and graphite nanoparticles through the same low cost ball or bead milling, and the ability to provide a composite material with a relatively high level of elasticity. In one form of the present invention, the second embodiment thereof described hereinabove, it is envisaged that graphene need not be present, rather graphite particles are sufficient.

It is reasonably envisaged that the composite material and anode material of the present disclosure will provide improved capacity and better cycle life, at least in part as a result of multiple layers of graphene-like materials covering the silicon nanoparticles after grinding, which provides an improved expansion tolerance and improved conductivity, such as may be due to the 'graphene sliding' effect. Further, the FLG and GNP created during bead-milling are understood to maintain the secondary particle's conductivity during lithiation/delithiation (expansion/extraction) due to their high flexibility.

It is further envisaged that the coating step (iv) and further thermal treatment step (v) provide an additional protection to the Gr@Si@C or the intermediate composite, with the composites of silicon graphene, graphite and carbon matrix. This additional layer or shell assists in providing a stable SEI, reducing the contact between silicon and electrolyte, and reducing outward expansion during lithiation.

## Claims

1. A silicon and graphite containing composite material comprising a plurality of silicon nanoparticles coated with graphite particles, few-layer graphene particles, graphite nanoparticles, a carbon matrix, and an amorphous carbon external shell, wherein each of the graphite particle coated silicon nanoparticles, the few-layer graphene particles, and the graphite nanoparticles are held within the carbon matrix.

2. The composite material of claim 1, wherein the carbon matrix is provided in the form of:
(i) an amorphous carbon matrix;
(ii) a crystalline carbon matrix; or
(iii) a combination of both an amorphous carbon matrix and a crystalline carbon matrix.

3. The composite material of claim 1 or 2, wherein the graphite particles are in the form of graphene-like nano-sheets.

4. The composite material of any one of the preceding claims, wherein the external shell of amorphous carbon further compriss:
(i) one or more oxides; or
(ii) one or more oxides present in the form of Al₂O₃, TiO₂, ZrO₂, BaTiOs, MgO, CuO, ZnO, Fe₂O₃, GeO₂, Li₂O, MnO, NiO, or zeolite, or any combination thereof.

5. The composite material of claim 4, wherein the oxides have a particle size in the range of 20 nm to 1 micrometer (micron).

6. An anode composite comprising a composite material as described in any one of claims 1 to 5.

7. A method for the production of a composite material, the method comprising the method steps of:
(i) Subjecting silicon particles to a size reduction step with graphite particles in a solvent, optionally in the presence of a polymer, to produce graphite particle coated silicon nanoparticles, few-layer graphene particles and graphite nanoparticles;
(ii) Processing the product of step (i) with or without a binder to produce composites;
(iii) Thermal treatment of the composites of step (ii), thereby producing a composite material comprising a plurality of graphite particle coated silicon nanoparticles, few-layer graphene particles, graphite nanoparticles and a carbon matrix, wherein each of the particles are held within the carbon matrix;
(iv) Coating of the composite material of step (iii) with a binder; and
(v) Thermal treatment of the composite material of step (iv) thereby producing a shell comprising amorphous carbon.

8. The method of claim 7, wherein the shell further comprises:
(i) one or more oxides; or
(ii) one or more oxides in the form of Al₂O₃, TiO₂, ZrO₂, BaTiOs, MgO, CuO, ZnO, Fe₂O₃, GeO₂, Li₂O, MnO, NiO, or zeolite, or combination thereof.

9. The method of claim 7 or 8, wherein the method further comprises an initial step in which a silicon material is subjected to a size-reduction step, in a solvent, to produce the silicon nanoparticles of step (i), the size reduction step of step (i) providing silicon nanoparticles having a size of between 20 to 200 nm.

10. The method of any one of claims 7 to 9, wherein the solvent is provided in the form of:
(i) a non-aqueous solvent; or
(ii) isopropyl alcohol.

11. The method of any one of claims 7 to 10, wherein the polymer is selected from the group of polyethylene oxide (PEO), polyvinyl alcohol (PVA), polyvinylidine fluoride (PVDF), poly(vinylidenefluoride-co-hexafluoropropylene) (PVDF-HFP), and poly(methyl methacrylate) (PMMA).

12. The method of any one of claims 7 to 11, wherein the processing of step (ii) is provided in the form of:
(i) spray-drying in the presence of a binder;
(ii) a mixing step; or
(iii) a mixing step comprising a hybridising process whereby the secondary particles or product so produced is spheronised.

13. The method of any one of claims 7 to 12, wherein the thermal treatments of steps (iii) and (v) are provided in the form of pyrolysis and convert any binder present to amorphous carbon.

14. The method of any one of claims 7 to 13, wherein the temperature of the thermal treatment of step (iii) is lower than that of step (v).

15. The method of any one of claims 7 to 14, wherein after the thermal treatment of step (iii), the composite material's surface area (BET) is in the range of 70-120m²/g, and after the thermal treatment of step (v), the material's surface area (BET) is in the range of 10-30m²/g.

16. The method of any one of claims 7 to 15, wherein the graphite particles of the milling step (i) are provided in the form of pre-exfoliated graphite particles.

17. The method of any one of claims 7 to 16, wherein the thermal treatment of step (iii) is conducted at a temperature in the range of 500°C to 700°C.

18. The method of any one of claims 7 to 17, wherein the thermal treatment of step (v) is conducted at a temperature in the range of:
(i) 750°C to 1100°C; or
(ii) 850°C to 1000°C.

19. The method of claim 7, wherein the processing of step (ii) is conducted by way of spray-drying or mechanofusion.

## Patentansprüche

1. Silizium und Graphit enthaltender Verbundwerkstoff, der eine Vielzahl von mit Graphitpartikeln beschichteten Silizium-Nanopartikeln, wenigschichtigen Graphen-Partikeln, Graphit-Nanopartikeln, eine Kohlenstoffmatrix und eine äußere Schale aus amorphem Kohlenstoff aufweist, wobei jedes der mit Graphitpartikeln beschichteten Silizium-Nanopartikel, der wenigschichtigen Graphen-Partikel und der Graphit-Nanopartikel innerhalb der Kohlenstoffmatrix gehalten ist.

2. Verbundwerkstoff nach Anspruch 1, wobei die Kohlenstoffmatrix bereitgestellt ist in Form von:
(i) einer amorphe Kohlenstoffmatrix;
(ii) einer kristalline Kohlenstoffmatrix; oder
(iii) einer Kombination aus einer amorphen und einer kristallinen Kohlenstoffmatrix.

3. Verbundwerkstoff nach Anspruch 1 oder 2, wobei die Graphitpartikel in Form von graphen-artigen Nanoschichten vorliegen.

4. Verbundwerkstoff nach einem der vorhergehenden Ansprüche, wobei die äußere Schale aus amorphem Kohlenstoff weiterhin umfasst:
(i) ein oder mehrere Oxide; oder
(ii) ein oder mehrere Oxide die in Form von Al₂O₃, TiOz, ZrOz, BaTiOs, MgO, CuO, ZnO, Fe₂O₃, GeOz, LizO, MnO, NiO oder Zeolith oder einer Kombination davon vorliegen.

5. Verbundwerkstoff nach Anspruch 4, wobei die Oxide eine Partikelgröße im Bereich von 20 nm bis 1 Mikrometer (Mikron) aufweisen.

6. Anodenverbundstoff, der ein Verbundwerkstoff nach einem der Ansprüche 1 bis 5 aufweist.

7. Verfahren zur Herstellung eines Verbundwerkstoffs, wobei das Verfahren die folgenden Verfahrensschritte umfasst:
(i) Siliziumpartikel mit Graphitpartikeln in einem Lösungsmittel einem Größenreduzierungsschritt unterziehen, gegebenenfalls in Gegenwart eines Polymers, zum Herstellen von mit Graphitpartikeln beschichteten Silizium-Nanopartikeln, wenigschichtigen Graphen-Partikeln und Graphit-Nanopartikeln;
(ii) Verarbeitung des Produkts aus Schritt (i) mit oder ohne Bindemittel zur Herstellung von Verbundstoffen;
(iii) Thermische Behandlung der Verbundstoffe aus Schritt (ii), wodurch ein Verbundwerkstoff hergestellt wird, der eine Vielzahl von mit Graphitpartikeln beschichteten Silizium-Nanopartikeln, wenigschichtigen Graphen-Partikeln Graphit-Nanopartikeln und eine Kohlenstoffmatrix aufweist, wobei jedes der Partikel innerhalb der Kohlenstoffmatrix gehalten wird;
(iv) Beschichtung des Verbundwerkstoffs aus Schritt (iii) mit einem Bindemittel; und
(v) Thermische Behandlung des Verbundwerkstoffs aus Schritt (iv), wodurch eine Schale aus amorphem Kohlenstoff entsteht.

8. Verfahren nach Anspruch 7, wobei die Schale weiterhin umfasst:
(i) ein oder mehrere Oxide; oder
(ii) ein oder mehrere Oxide in Form von Al₂O₃, TiOz, ZrOz, BaTiOs, MgO, CuO, ZnO, Fe₂O₃, GeO₂, Li₂O, MnO, NiO oder Zeolith oder einer Kombination davon.

9. Verfahren nach Anspruch 7 oder 8, wobei das Verfahren ferner einen anfänglichen Schritt umfasst, bei dem ein Siliziummaterial in einem Lösungsmittel einem Größenreduzierungsschritt unterzogen wird, um die Silizium-Nanopartikel von Schritt (i) herzustellen, wobei der Größenreduzierungsschritt von Schritt (i) Silizium-Nanopartikel mit einer Größe zwischen 20 und 200 nm bereitstellt.

10. Verfahren nach einem der Ansprüche 7 bis 9, wobei das Lösungsmittel bereitgestellt wird in Form von:
(i) einem nichtwässrigen Lösungsmittel; oder
(ii) Isopropylalkohol.

11. Verfahren nach einem der Ansprüche 7 bis 10, wobei das Polymer ausgewählt ist aus der Gruppe von Polyethylenoxid (PEO), Polyvinylalkohol (PVA), Polyvinylidenfluorid (PVDF), Poly(vinylidenfluorid-co-hexafluorpropylen) (PVDF-HFP) und Poly(methylmethacrylat) (PMMA).

12. Verfahren nach einem der Ansprüche 7 bis 11, wobei die Verarbeitung des Schritts (ii) bereitgestellt wird in Form von:
(i) Sprühtrocknen in Gegenwart eines Bindemittels;
(ii) einem Vermischungsschritt; oder
(iii) einem Vermischungsschritt, der ein Hybridisierungsverfahren umfasst, bei dem die so hergestellten Sekundärpartikel oder das Produkt kugelförmig werden.

13. Verfahren nach einem der Ansprüche 7 bis 12, wobei die thermischen Behandlungen der Schritte (iii) und (v) in Form von Pyrolyse erfolgt und jedes vorhandene Bindemittel in amorphen Kohlenstoff umwandelt.

14. Verfahren nach einem der Ansprüche 7 bis 13, wobei die Temperatur der thermischen Behandlung von Schritt (iii) niedriger ist als die von Schritt (v).

15. Verfahren nach einem der Ansprüche 7 bis 14, wobei nach der thermischen Behandlung von Schritt (iii) die Oberflächengröße (BET) des Verbundwerkstoffs im Bereich von 70-120 m²/g liegt, und nach der thermischen Behandlung von Schritt (v) die Oberflächengröße (BET) des Werkstoffs im Bereich von 10-30 m²/g liegt.

16. Verfahren nach einem der Ansprüche 7 bis 15, wobei die Graphitpartikel des Mahlschritts (i) in Form von aufgeblähten Graphitpartikeln bereitgestellt werden.

17. Verfahren nach einem der Ansprüche 7 bis 16, wobei die thermische Behandlung von Schritt (iii) bei einer Temperatur im Bereich von 500°C bis 700°C durchgeführt wird.

18. Verfahren nach einem der Ansprüche 7 bis 17, wobei die thermische Behandlung von Schritt (v) durchgeführt wird bei einer Temperatur im Bereich von:
(i) 750°C bis 1100°C; oder
(ii) 850°C bis 1000°C.

19. Verfahren nach Anspruch 7, wobei die Verarbeitung von Schritt (ii) mittels Sprühtrocknung oder Mechanofusion durchgeführt wird.

## Revendications

1. Matériau composite contenant du silicium et du graphite comprenant une pluralité de nanoparticules de silicium enrobées de particules de graphite, des particules de graphène à peu de couches, des nanoparticules de graphite, une matrice de carbone et une coquille extérieure en carbone amorphe, dans lequel chacune des nanoparticules de silicium enrobées de particules de graphite, des particules de graphène à peu de couches et des nanoparticules de graphite sont maintenues au sein de la matrice de carbone.

2. Matériau composite suivant la revendication 1, dans lequel la matrice de carbone se présente sous la forme de :
(i) une matrice de carbone amorphe ;
(ii) une matrice de carbone cristalline ; ou
(iii) une combinaison à la fois d'une matrice de carbone amorphe et d'une matrice de carbone cristalline.

3. Matériau composite suivant la revendication 1 ou 2, dans lequel les particules de graphite sont sous la forme de nano feuilles analogues à du graphène.

4. Matériau composite suivant l'une quelconque des revendications précédentes, dans lequel la coquille extérieure de carbone amorphe comprend en outre :
(i) un ou plusieurs oxydes ; ou
(ii) un ou plusieurs oxydes présents sous la forme de AL₂O₃, TiO₂, ZrO₂, BaTiOs, MgO, CuO, ZnO, Fe₂O₃, GeO₂, Li₂O, MnO, NiO ou zéolite ou l'une de leurs combinaisons.

5. Matériau composite suivant la revendication 4, dans lequel les oxydes ont une granulométrie dans la plage de 20 nm à 1 micromètre (micron).

6. Composite d'anode comprenant un matériau composite tel que décrit dans l'une quelconque des revendications 1 à 5.

7. Procédé de production d'un matériau composite, le procédé comprenant les stades de procédé, dans lesquels :
(i) on soumet des particules de silicium à un stade de réduction de dimension avec des particules de graphite dans un solvant, éventuellement en la présence d'un polymère pour produire des nanoparticules de silicium enrobées de particules de graphite, des particules de graphène à peu de couches et des nanoparticules de graphite ;
(ii) on traite le produit du stade (i) avec ou sans un liant pour produire des composites ;
(iii) on traite thermiquement les composites du stade (ii), en produisant ainsi un matériau composite comprenant une pluralité de nanoparticules de silicium enrobées de particules de graphite, des particules de graphène à peu de couches, des nanoparticules de graphite et une matrice de carbone, chacune des particules étant maintenues au sein de la matrice de carbone ;
(iv) on enrobe le matériau composite du stade (iii) d'un liant ; et
(v) on traite thermiquement le matériau composite du stade (iv) en produisant ainsi une coquille comprenant du carbone amorphe.

8. Procédé suivant la revendication 7, dans lequel la coquille comprend en outre :
(i) un ou plusieurs oxydes ; ou
(ii) un ou plusieurs oxydes présents sous la forme de AL₂O₃, TiO₂, ZrO₂, BaTiOs, MgO, CuO, ZnO, Fe₂O₃, GeO₂, Li₂O, MnO, NiO ou zéolite ou l'une de leurs combinaisons.

9. Procédé suivant la revendication 7 ou 8, dans lequel le procédé comprend en outre un stade initial, dans lequel on soumet un matériau de silicium à un stade de réduction de dimension, dans un solvant, pour produire les nanoparticules de silicium du stade (i), le stade de réduction de dimension du stade (i) donnant des particules de silicium ayant une dimension comprise entre 20 et 200 nm.

10. Procédé suivant l'une quelconque des revendications 7 à 9, dans lequel le solvant se présente sous la forme de :
(i) un solvant non aqueux ; ou
(ii) d'alcool isopropylique.

11. Procédé suivant l'une quelconque des revendications 7 à 10, dans lequel le polymère est choisi dans le groupe du poly (oxyde d'éthylène) (PEO), de l'alcool polyvinylique (PVA), du poly (fluorure de vinylidène) (PVDF), du poly ((fluorure de vinylidène) - co-hexafluoropropylène) (PVDF-HFP), et du poly (méthacrylate de méthyle) (PMMA).

12. Procédé suivant l'une quelconque des revendications 7 à 11, dans lequel le traitement du stade (ii) se présente sous la forme de :
(i) un séchage par pulvérisation en la présence d'un liant ;
(ii) un stade de mélange ; ou
(iii) un stade de mélange comprenant une opération d'hybridation, dans lequel les particules secondaires ou le produit ainsi produit est sphéronisé.

13. Procédé suivant l'une quelconque des revendications 7 à 12, dans lequel les traitements des stades (iii) et (v) se présentent sous la forme d'une pyrolyse et transforment tout liant présent en du carbone amorphe.

14. Procédé suivant l'une quelconque des revendications 7 à 13, dans lequel la température du traitement thermique du stade (iii) est plus basse que celle du stade (v).

15. Procédé suivant l'une quelconque des revendications 7 à 14, dans lequel, après le traitement thermique du stade (iii), la surface spécifique (BET) du matériau composite est dans la plage de 70 à 120 m²/g et, après le traitement thermique du stade (v), la surface spécifique (BET) du matériau est dans la plage de 10 à 30 m²/g.

16. Procédé suivant l'une quelconque des revendications 7 à 15, dans lequel les particules de graphite du stade (i) de broyage se présentent sous la forme de particules de graphite préexfoliées.

17. Procédé suivant l'une quelconque des revendications 7 à 16, dans lequel on effectue le traitement thermique du stade (iii) à une température de 500°C à 700°C.

18. Procédé suivant l'une quelconque des revendications 7 à 17, dans lequel on effectue le traitement thermique du stade (v) à une température dans la plage de :
(i) 750°C à 1100°C ; ou
(ii) 850°C à 1000°C.

19. Procédé suivant la revendication 7, dans lequel on effectue le traitement du stade (ii) au moyen d'un séchage par pulvérisation ou d'une mécanofusion.
